# EUROPEAN PATENT APPLICATION

(11) **EP 2 975 521 A2**
(43) Date of publication of application: **20.01.2016**
(21) Application number: 15169735.6
(22) Date of filing: 28.05.2015
(51) Int. Cl.: G06F 9/54, G06F 11/30, H04L 12/26

(54) **SYSTEMS AND METHODS FOR MANAGING INFRASTRUCTURE SYSTEMS**

(30) Priority: 30.05.2014 US 201414292595
(71) Applicant: General Electric Company, Schenectady, NY 12345 (US)
(72) Inventor: TADEPALLI, Venue, Atlanta, GA 30339 (US); ASTAFUROV, George, Atlanta, GA 30339 (US); YEMBRA, Temidayo Temidoyo, Atlanta, GA 30339 (US); IMRAN, Asheq, Atlanta, GA 30339 (US)
(74) Representative: Cleary, Fidelma

(57) **Abstract**

A system includes a physical server (52) that is configured to be operatively coupled to a communications system (48) and to connect with a plurality of clients (56). The physical server (52) is further configured to provide an application programming interface (API) that enables the plurality of clients (56) to communicatively couple to each other via the communications system (48), an operator system (57) to place a conference call to the plurality of clients (56) and the plurality of clients to send and to receive status updates (58) for a smart grid system via the communications system (48). The physical server (52) is also configured to monitor a status of calls between connected clients (56) of the plurality of clients and broadcast a global state update (62) to the connected clients (56).

## Description

### BACKGROUND

The subject matter disclosed herein relates to managing infrastructure systems. Specifically, the subject matter described below relates to management systems for analyzing infrastructure systems and responding to issues.

Companies use a variety of management systems to monitor infrastructure systems. For example, a utility company may use a distribution management system (DMS) or an outage management system (OMS) to monitor the company's utility infrastructure system. The management system may provide an operator or dispatcher various data about the state of the infrastructure system, such as the number of customers receiving service, the amount of energy produced and consumed per hour, the number of unresolved issues, maintenance schedules, the state of sections and sub-sections of the infrastructure system, and the like. The outage management system may provide an operator or dispatcher information about reported outages. It would be beneficial to improve the management of the infrastructure system.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a physical server that is configured to be operatively coupled to a communications system and to connect with a plurality of clients. The physical server is further configured to provide an application programming interface (API) that enables the plurality of clients to communicatively couple to each other via the communications system, an operator system to place a conference call to the plurality of clients and the plurality of clients to send and to receive status updates for a smart grid system via the communications system. The physical server is also configured to monitor a status of calls between connected clients of the plurality of clients and broadcast a global state update to the connected clients.

In a second embodiment, a system includes a physical server configured to operatively couple to a communications system included in an infrastructure system, to at least one client, and to a database repository. The physical server is further configured to provide a conferencing service to the at least one client via the communications system and to receive a first status update of the infrastructure system from the communications system and a second status update from the at least one client. The physical server is configured to then transmit the first status update and the second status update to the database repository. The database repository is configured to update a global state of the infrastructure system based on the first status update and the second status update and transmit the global state update to a second database repository and the physical server. The at least one client is configured to display a state of the infrastructure system and display a plurality of users and a user status for each of the plurality of users. The user status for each of the plurality of users comprises a log-in status for a respective user, a list of communication actions associated with the respective user, or a combination thereof. The at least one client is also configured to receive the global state update from the physical server, change the display of the state of the infrastructure system and the display of the plurality of users and the user status for each of the plurality of users based on the global state update, and communicatively couple to another client.

In a third embodiment, a method includes connecting with a plurality clients and providing an application programming interface (API) to enable the plurality of clients to communicatively couple to each other via a communications system. The provided API also enables the plurality of clients to place a conference call to the plurality of clients and to send and receive status updates for a smart grid infrastructure system via the communications system. The method further includes monitoring a status of calls between connected clients of the plurality of clients and broadcasting a global state update to the connected clients.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an infrastructure system, in accordance with an embodiment of the present approach;
FIG. 2 is a block diagram of a management response system for the infrastructure system of FIG. 1, in accordance with an embodiment of the present approach;
FIG. 3 is a block diagram of the architecture of a site within the management response system of FIG. 2, in accordance with an embodiment of the present approach;
FIG. 4 illustrates an action of using a client within the management response system of FIG. 2, in accordance with an embodiment of the present approach;
FIG. 5 is a screenshot of geographic information system (GIS) screen for an operator system in the management response system of FIG. 2, in accordance with an embodiment of the present approach;
FIG. 6 is a screenshot of geographic information system (GIS) operative screen of the management response system of FIG. 2, in accordance with another embodiment of the present approach; and
FIG. 7 is a process for responding to an outage using the management response system of FIG. 2, in accordance with an embodiment of the present approach.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. The term "component" refers to a computer-related entity, either a combination of hardware and software; software stored on a tangible, non-transitory, machine-readable medium; or software in execution on a processor.

Present embodiments relate to systems and methods for managing infrastructure systems. Specifically, the embodiments described below relate to a management response system that may combine the functionality of a distribution management system (DMS) with that of an outage management system (OMS), enabling a user to more easily perform several different tasks using the same system throughout. The management response system may be an add-on to a communication system, such as a telecommunications system, and may allow a user to initiate communications with another individual or entity, further increasing the number of tasks that can be performed using the management response system. The management response system may also log and analyze all communication actions by a user and the content associated with the communication actions. The analyzed data may be used for a variety of applications, such as smart troubleshooting for deriving future issues, providing data to training modules, creating automated audits, and the like.

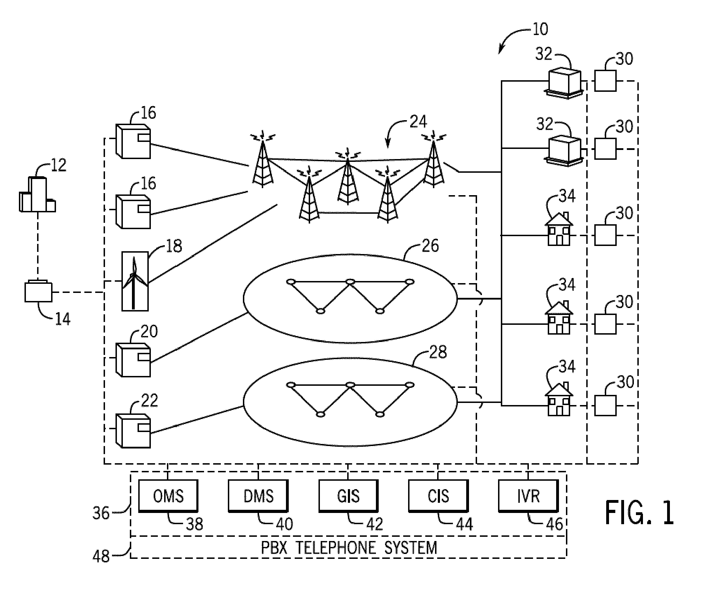

With the foregoing in mind, FIG. 1 illustrates a smart grid system 10 as an example of an infrastructure system. Although the embodiments disclosed below are described with regards to the smart grid system 10, it should be understood that the systems and methods described herein may apply to other types of infrastructure systems, such as cloud computing infrastructure systems, airport infrastructure systems, transit infrastructure systems, telecommunications infrastructure systems, and the like. As depicted, the smart grid system 10 includes one or more utilities 12. The utility 12 provides for oversight operations of the smart grid system 10. For example, one or more utility control centers 14 may monitor and direct power produced by one or more power generation stations 16 and alternative power generation stations 18. The power generation stations 16 may include conventional power generation stations, such as power generation stations using gas, coal, biomass, and other carbonaceous products for fuel. The alternative power generation stations 18 may include power generation stations using solar power, wind power, hydroelectric power, geothermal power, and other alternative sources of power (e.g., renewable energy) to produce electricity. Other infrastructure components may include a water processing plant 20 and gas processing plant 22. For example, water processing plants 20 may provide potable water, and gas processing plants 22 may provide natural gas.

The power generated by the power generation stations 16 and 18 may be distributed through a power transmission grid 24. Likewise, the water and gas provided by the plants 20 and 22 may be delivered through a water distribution grid 26 and a gas distribution grid 28 respectively. The grids 24, 26, and 28 may cover a broad geographic region, such as one or more municipalities, states, or countries. In the depicted embodiment, an advanced metering infrastructure (AMI) system 30 may be used to measure, collect, and analyze electricity, water, and gas usage. The AMI system 30 may be communicatively coupled to one or more of the components of the smart grid system 10, including the grids 24, 26, and 28. Additionally, the AMI system 30 may enable two-way communication between commercial sites 32, residences 34, and the utility control center 14, providing a link between consumer behavior and utility consumption (e.g., electric, water, and/or gas consumption). For example, AMI meters 30 may track and account for pre-paid electricity, water, and/or gas in a similar fashion to pre-paid cell phone usage. Likewise, the utility's consumers 32 and 34 may benefit from lower utility charges by optimizing their utility use, for example, to take advantage of lower rates during low demand hours. Washers and dryers, electric car chargers, and other flexible power consumption appliances may be programmed to operate during low demand hours, resulting lower utility bills and a more balanced utilization of energy.

To monitor the operations of certain components (e.g., the power generation systems 16; the alternative power generation systems 18; the plants 20 and 22; and the grids 24, 26, and 28), the smart grid system10 may include a management response system 36. The management response system 36 may incorporate an outage management system 38 and a distribution management system 40, as shown in FIG. 1. The outage management system 38 may respond to outage events within the smart grid system 10 that may be reported by customers or components of the AMI 30 (e.g., smart meters). In certain embodiments, the outage management system 38 may predict outage events using an outage prediction engine.

The distribution management system 40 may re-route power, water, and/or gas from the power generation systems 16, the alternative power generation systems 18, and the plants 20 and 22 experiencing lesser demand to the power generation systems 16, the alternative power generation systems 18, and the plants 20 and 22 experiencing greater demand. In certain embodiments, the outage management system 38 and the distribution system 40 may interact with one another. For example, during outage events, the distribution management system 40 may work in conjunction with the outage management system 38 to re-route power, water, and gas to the affected customers if possible.

By combining the functionalities of outage and distribution management systems within the management response system 36, the management response system 36 may reduce the complexity of managing the smart grid system 10 and responding to issues. The management response system 36 may also incorporate other types of management systems in order to reduce complexity. It should be noted, however, that in certain embodiments, the management response system 36 may include either the outage management system 38 or the distribution management system 40, or the functionality provided by both systems 38, 40.

In certain embodiments, the management response system may include a geographic information system (GIS) 42 used to provide the physical location of the power generation systems 16, the alternative power generations 18, the plants 20 and 22, grid 24 components (e.g., electrical cabling, transformers, distribution towers, etc.), grid 26 components (e.g., water pipes, valves, pressure reducers, etc.), grid 28 components (e.g., storage tanks, gas pipes, valves, etc.) the AMI 30, the commercial sites 32, and the residential sites 34. The GIS 42 may also provide the physical location for personnel (e.g., for crew members carrying company-issued cell-phones with global positioning system (GPS) capabilities). The physical location information may be used, for example, by the outage management system 38 and the distribution management system 40 to predict and resolve outage issues. Additionally, the GIS 42 may be used to visualize the various locations on a map or other suitable visual medium (e.g., globe, chart, etc.). The management response system 36 may also include a customer information system 44 to provide customer information (e.g., sites 32 and 34), including billing information, electric usage information, water usage information, gas usage information, billing rates, and the like. Further, the management response system 36 may include an interactive voice response system 46 to provide automated voice recognition and menu navigation suitable for processing customer requests over telephonic lines.

As depicted in FIG. 1, and described below, the management response system 36 may include a private branch exchange (PBX) telecommunications system 48. The PBX system 48 may include mobile PBX embodiments suitable for provisioning mobile devices (e.g., cell phones, tablets, netbooks, notebooks, etc.) as extensions that may implement PBX functionality. The PBX system 48 may include internet protocol PBX (IP-PBX) functionality suitable for communications via internet protocols. Alternately or additionally, the management response system 36 may include other types of communication systems, including telecommunications systems using standard telephonic lines, voice over internet protocol (VOIP), dedicated teleconferencing systems, or a combination thereof. In other embodiments, the management response system 36 may be designed such that it is an add-on or a retrofit for a management system (e.g., the outage management system 38 or the distribution management system 40).

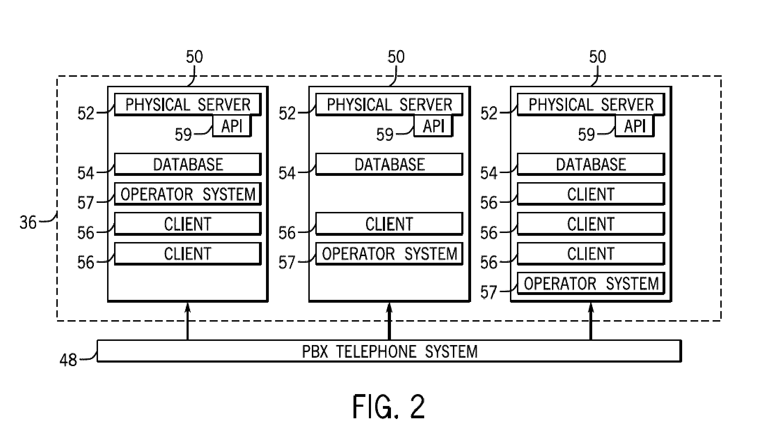

In one embodiment, the management response system 36 may be arranged as a group of interconnected sites 50, as shown in FIG. 2. Each site 50 is operatively and communicatively coupled to the PBX telephone system 48, and, alternately or additionally, other communication systems, as mentioned above. Each site 50 may include a physical server 52, a database system 54, and at least one client 56. Further, some sites 50 may include an operator system 57.

Both the physical server 52 and the database system 54 include a memory and a communicative link to other components, systems, and devices. The memory of may be a mass storage device (e.g., disk-based memory), a FLASH memory device, removable memory, or any other non-transitory computer-readable medium suitable for storing instructions to run the physical server 52 or the database system 54 or for storing data. The server 52 and the database system 54 may also include one or more processors suitable for executing computer instructions stored in memories of the server 52 and database system 54. The communicative link may be any wired (e.g., a wired telecommunication infrastructure or local area network employing Ethernet) or wireless (e.g., a cellular network or an 802.11x Wi-Fi network) connection that allows the physical server 52 to communication with other components, systems, and devices.

As mentioned earlier, the physical server 52 also includes a processor. The processor may be, for example, a general-purpose single- or multi-chip processor suitable for performing computing and processing tasks. Additionally, the processor may be any conventional special-purpose processor, such as an application-specific processor or circuitry. The processor and other data processing circuitry may be operably coupled to the memory to execute instructions for running the physical server 52. These instructions may be encoded in programs that are stored in the memory and accessed and executed by the processor. In some embodiments, the database system 54 may also include its own processor to execute tasks related to the storage and retrieval of data (e.g., retrieving the number of unique user IDs stored on the database or outputting a log of data). In other embodiments, the database 54 may not include its own processor, and may be an extension of the memory of the physical server 52.

The client 56 may include a device or system (e.g., workstation, computer system, cell phone, tablet, mobile device, etc.) that a user (e.g., an operator or utility dispatcher) utilizes to interact with the management response system 36. The client 56 includes at least a processor, memory, a display, a user input device, and a communicative link. The processor, the memory, and the communicative link may be similar to the ones described above with respect to the physical server 52 and the database 54. The display and the user input device (e.g., a keyboard, mouse, touchscreen, gesture input device, etc.) allow a user to interact with the management response system 36. Each client 56 within the management response system 36 may be assigned to a specific site 50. The site assignment for a client 56 may be static or dynamic in nature. For example, the site assignments for clients 56 may be permanently assigned based on pre-defined service regions or may change based on the proximity of the client 56 to a particular physical server 52.

In certain embodiments, the client 56 allows the user to access portions or all of the management response system 36 via a web browser. For example, an operator or utility dispatcher may be provided with a uniform resource locator (URL) to a secure website operatively coupled to the client 56. In other embodiments, the client 56 allows the user to access portions or all of the management response system 36 via an application that can be installed on a device and run outside of a web browser (e.g., a mobile "app" that operates as a client 56). In still other embodiments, the client 56 may allow the user to access portions or all of the management response system 36 via a web browser and a program that may be installed on a device and run outside of a web browser. As a result, the manner in which the management response system 36 is accessed may depend on the needs and desires of the end user as well as the type of device being used to access the management response system 36.

The operator system 57 is a specialized version of the clients 56 that have been adapted for operators and utility dispatchers. That is, the operator system 57 may be modified to show operators and utility dispatchers certain information, such as a customer's billing information that is not necessarily available to other users, such as a crew member. It should be noted that, unless specified otherwise, all of the features described in relation to the client 56 apply to the operator system 57 as well.

For each site 50, the physical server 52 may be architected as the "center" or primary server for the site. That is, the PBX telephone system 48, the database 54, the clients 56, and the operator system 57 may all communicate with the physical server 52 via an application programming interface (API) 59 that may leverage certain functionality provided by the physical server 52. Further, as will be described in further detail below, all major changes and updates to the management response system 36 may emanate from the physical server 52.

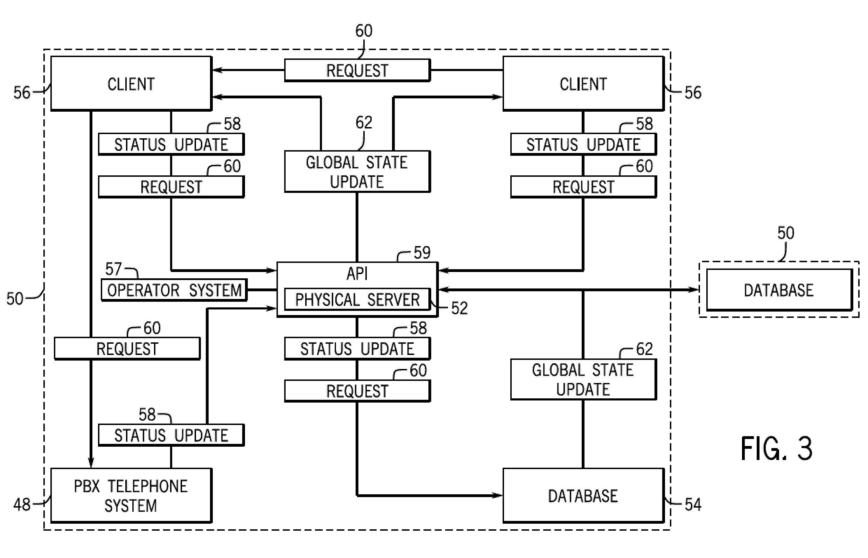

As mentioned above, each site 50 is operatively and communicatively coupled to the PBX telephone system 48. In particular, the physical server 52 of each site 50 may be coupled to a PBX telephone system 48, as shown in FIG. 3. For example, a physical server 52 may be coupled to the PBX telephone system 48 during operations. Additionally, the PBX system may be communicatively coupled with a call center for a utility company. The physical server 52 receives status updates 58 from the PBX telephone system 48, as depicted in FIG. 3. The status updates 58 from the PBX telephone system 48 may include the phone states of each user (e.g., unavailable, busy, ready to connect, etc.), the duration of any ongoing phone calls, the number and content of voicemails, and the like. That is, the status updates 58 may include any communication action that involves the PBX telephone system 48, as well as any content associated with a communication action. Similarly, the physical server 52 receives status updates 58 from the clients 56 as well. The status updates 58 from the clients 56 include any type of communication action and content associated with a communication action (e.g., emails, bulletin board messages, forum posts, chats, etc.). The status updates 58 from the clients 56 may also include authentication information, such as the log-in status of a particular user.

In addition to receiving status updates 58, the physical server 52 may also receive requests 60 from one or more clients 56 to perform a specific action. For example, the physical server 52 may receive a request 60 to post a message to a bulletin board or to initiate a telephone or video conference call between two or more users. Depending on the type of request 60, the physical server 52 may either fulfill the request itself or may route the request to an appropriate client 56 (e.g., initiating a chat conversation, telephone conference call, video conference call, etc.). Further, some requests 60 may bypass the physical server 52 and be sent directly to the intended recipient (e.g., an email or a VOIP call hosted by the PBX telephone system 48). In such situations, the requests 60 may still be sent to the intended recipient using the API 59. For example, the operator system 57 may use the API 59 to operate the PBX telephone system 48 to initiate a conference call to multiple clients 56

The physical server 52 may send any updates, requests, and data to the database 54 to either update the database 54 or save data for later analysis. For example, the physical server 52 may forward the status updates 58 to the database 54. Certain types of requests 60 may also be forwarded to the database 54 by the physical server 52, while for other types of requests 60, the associated information is included in the status updates 58.

The physical server 52 may also analyze all of the communication actions and the content associated with the communication actions, as shown in FIG. 3. In particular, the physical server 52 may tag or associate the communication actions and content with contextual data that describes the current situation in which the communication action or content is occurring. For instance, the content of an email may be tagged or associated with the issue being resolved, the personnel and equipment involved, the communication action (i.e., email), a time stamp, and other relevant contextual data. To determine the how to derive the tags, the physical server 52 analyzes communication actions, content, other actions taken by the user, and other types of content generated by the user. In other embodiments, as will be described below, the physical server 52 may tag or analyze a communication action or content according to user input received through the client 56. The physical server 52 may then review the tagged and analyzed data to identify patterns that can be utilized for a variety of applications, such as smart troubleshooting performed by the client 56, as described below, training modules, audits, and the like. Further, the physical server 52 may utilize a machine learning algorithm (e.g., neural networks, Bayesian statistics, case-based reasoning, etc.) to improve the identified patterns. Communication actions may include telephone conference calls, video conference calls, emails, short messaging service (SMS)/text messages, chat messages, bulletin board postings, forum postings, and the like.

The database 54 receives and stores the status updates 58 and requests 60 and updates a global state of the management response system 36 based on the information in the status updates 58 and requests 60. The global state of the management response system 36 may reflect any information that may be important to the management response system 36 as a whole. For example, the global state may include a list of all physical servers 52, and which databases 54 they communicate with; a list of all users and the associated log-in status; the availability status for each user; and all communications open to the public (e.g., bulletin board messages).

If there is a global state change, the database 54 notifies the physical server 52 within the site 50 via a global state update 62, as depicted in FIG. 3. The site 50 may then transmit the global state update 62 to the clients 56. In certain embodiments, the physical server 52 may determine, based on the status updates 58, if there is a global state change, and the database 54 merely confirms that it has updated the global state of the management response system 36. In other embodiments, the physical server 52 may continuously send status updates 58 to the database 54, which is responsible for determining whether or not there is a global state change. Once the database 54 has notified the corresponding physical server 52, the database 54 transmits the global state update 62 to the databases 54 of the other sites 50 within the management response system 36, as shown in FIG. 3. Alternately or additionally, the physical server 52 may transmit the global state update 62 to other physical servers 52, which may then transmit the global state update 62 to their corresponding databases 54. Data may be replicated between sites using a variety of techniques. For example, the database systems 54 may include data replication techniques such as publish/subscribe techniques, data push techniques, data pull techniques, and so on, suitable for updating data and maintaining data consistency throughout multiple database systems 54. The servers 52 may also communicate with each other to maintain data updates and consistency between sites 50, for example, by using shared memory, interprocess communications (IPC), messaging passing, and the like.

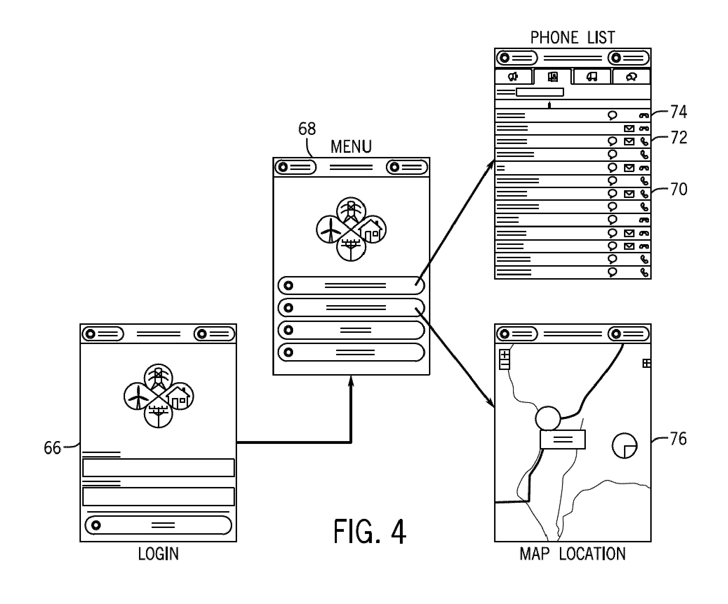

As mentioned above, the client 56 may be used by the user to interact with the management response system 36. In particular, the client 56 may present several different screens via which the user may perform a variety of tasks, as shown in FIG. 4. For example, when the user first accesses the management response system 36, the client 56 may present a log-in screen 66 in which the user may enter his or her authentication credentials. Once logged in, the user may then be presented with the menu screen 68, which may list a variety of actions the user can take, such as initiating communications (e.g., sending an email, posting a bulletin board message, etc.), viewing the state of the smart grid system 10 (e.g., viewing outages), viewing analyzed data, calling (including videoconferencing) a person or group, and the like.

Each action listed in the menu screen 68 may prompt the client 56 to present another type of screen. For example, selecting the action "initiate communications" may prompt a screen similar to a contacts screen 70, which lists the contacts for the user as well as the user's log-in (e.g., logged in or logged out) status, availability status (e.g., unavailable, busy, active, etc.) for any communication techniques associated with the contact. As depicted in FIG. 4, the visual presentation of elements and icons within the contacts screen 70 may indicate the availability of the user using a certain communication method. For example, a phone icon 72 may be mostly vertical to indicate that the user may call the contact, while the phone icon 72 may be mostly horizontal to indicate that the contact is already in a call. In another instance, the lack of an email icon 74 for a particular contact may indicate that the user has yet to associate an email address with the contact. The user may select a communication method for a contact, which prompts the client 56 to send a request 60 to the physical server 52, the PBX telephone system 48, or another client 56 to initiate communication, as described above.

In another example, selecting the action "view outages" may prompt a screen similar to a GIS screen 76, which may display a geographical view of any reported or suspected outages within the smart grid system 10 and associated information. As will be appreciated, the GIS screen 76 may be generated by the outage management system 38 and the GIS system 42. In certain embodiments, the GIS screen 76 may also include geographical views of human and physical resources and their availability.

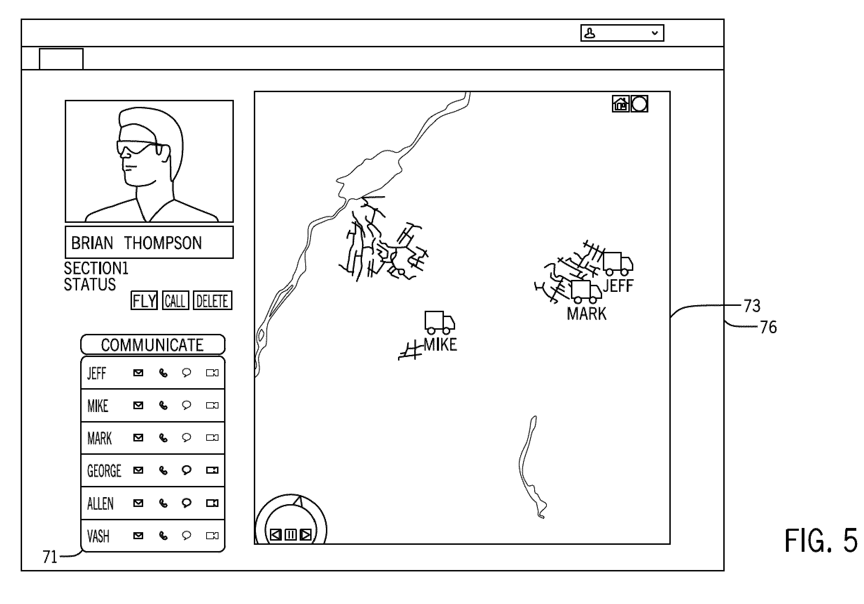

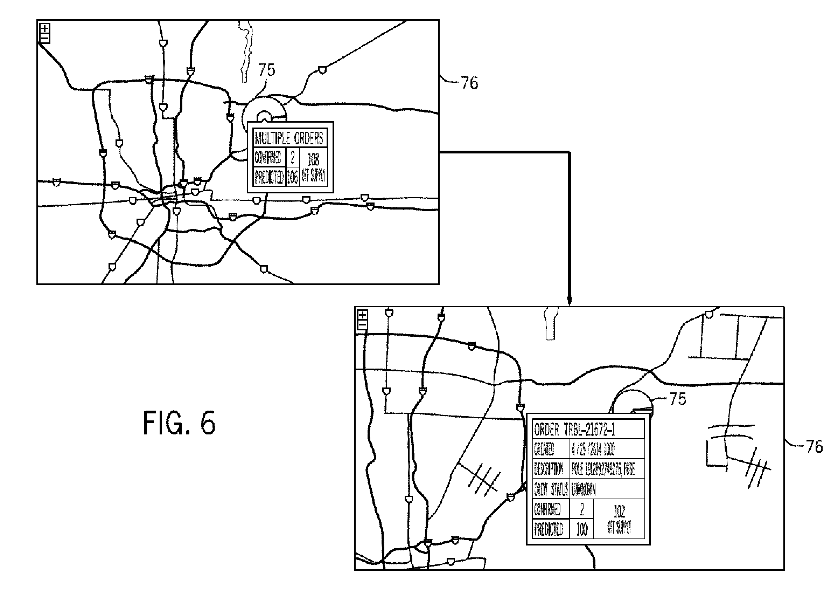

The GIS screen 76 depicted in FIG. 4 may be representative of the GIS screen 76 a typical user (e.g., a crew member). However, an operator or utility dispatcher using the operator system 57 may view a GIS screen 76 similar to that depicted in FIG. 5, which may include enhanced capabilities. For instance, the GIS screen 76, as shown in FIG. 5, may display both a geographic view 73 of the smart grid system 10 as well as a contact list 71 similar to the one described above with reference to the contacts screen 70. In another embodiment, the GIS screen 76 may resemble that of FIG. 6, in which the screen displays the geographic view 73 of the smart grid system 10 that includes an unresolved issue (e.g., an outage). The appearance of a marker 75 indicating the physical location of the unresolved issue (i.e., the circle in FIG. 6) may also indicate an attribute of the unresolved issue. For example, the size of the circular marker 75 in FIG. 6 is proportional to the number of customers affected by the unresolved issue. In other embodiments, the appearance of the mark may indicate other attributes of the unresolved issue, such as a hazard level associated with the unresolved issue or the duration of unresolved issue. Further, the GIS screen 76 may include a semantic zooming mechanism, in which the amount and type of information about the unresolved issue displayed in the GIS screen 76 depends on the zoom level of the screen 76.

As mentioned above, the client 56 may perform "smart" troubleshooting during a response to an issue or event. For example, during an outage, the client 56 may determine the best individual (and list of individuals) to contact to resolve the outage and the best available communication technique (and a list of communication techniques). When troubleshooting an issue, the client 56 may base its determination on the issue type, the issue location, crew expertise, crew assignments, equipment and tool availability, and the like. In particular, the client 56 may work in conjunction with the physical server 52 to review analyzed data that shares characteristics (e.g., issue type, crew expertise, equipment and tool availability, etc.) with the issue at hand. Then, the physical server 52 may recommend the best individual(s) to contact based on the shared characteristics and the identified response patterns described above. The physical server 52 also recommends the best communication technique(s) or available communication techniques based on the status of the contact, for example, recommending a chat or email if the contact is currently in a phone call. Further, in some embodiments, the physical server 52 may recommend the best individual(s) to contact based on the contact's log-in status (i.e., is he or she logged in or out of the system) as well as the contact's schedule (e.g., is he or she scheduled to be on-duty long enough to resolve the issue).

The client 56 may also allow the user to view analyzed and tagged data, as depicted in the menu screen 68 in FIG. 4. Further, in certain embodiments, the user may utilize the client 56 to tag or analyze the communication actions and content that is logged by the physical server 52. For example, the user may tag a communication action and the associated content with the corresponding issue, event, expertise required, physical resource requirements (e.g., number of new transformers needed) and the like. In some embodiments, the user may utilize the client 56 to create reports that include the analyzed communication actions and content.

While the client 56 allows the user to conduct communications within the management response system 36, at times it may be necessary to interrupt ongoing communications with urgent news. For instance, a senior level manager may want to communicate to operators, utility dispatchers, and crew members that they should more carefully respond to outages in a particular region due to a natural disaster warnings. To send urgent communications that take priority over ongoing communications, the client 56 may associate a communication action with a priority level and the user's authority level. That is, when setting up the management response system 36, each user may be assigned an authority level based on his or her position (e.g., operator) and responsibilities within the company. Users who meet or exceed a particular authority level may then send mass alerts designated as high priority to other users. The client 56 may then perform the selected communication action and, if necessary, interrupt any ongoing communications (e.g., a phone call) between other individuals. Following the earlier example, the senior level manager may designate a text message detailing the urgent matter as a high priority communication action. The high priority text message may be automatically displayed in full on the client 56 associated with each recipient. In this manner, a more efficient response to infrastructure issues may be affected.

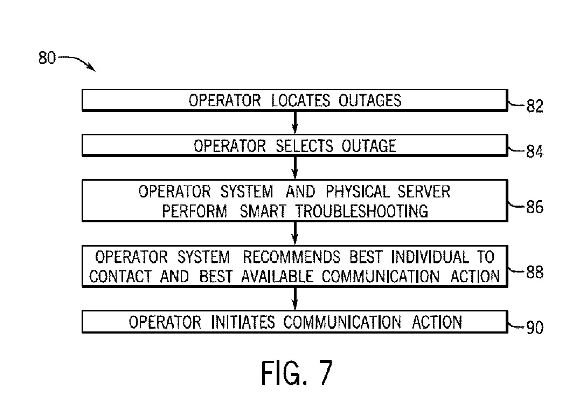

FIG. 7 depicts an embodiment of a process 80 for responding to an outage using the management response system 36. The process 80 may be implemented as computer instructions stored in the memories of the clients 56, 57, and/or server 52, and executable by their respective processors. Additionally, the steps illustrated may be performed concurrently or in a different order. Further, while the steps are described below as being performed on or by a particular device or system, it should be appreciated that the steps may be performed by another device or system equipped with the necessary functionality. It should also be noted that the method 80 for responding to an outage is only one example of multiple uses for the management response system 36.

Beginning at block 82, an operator may locate the outages within the smart grid system 10, which may be reported by customers or by equipment such as AMI meters 30, as described above. In particular, the operator system 57 may display a GIS screen 76 that includes a physical location of each outage, as described above with respect to FIG. 6. The operator then selects which outage to address at block 84. That is, for multiple outages, the operator may triage or prioritize outage responses. The operator's selection may be based on the real and potential impact of each outage (e.g., number of people affected, amount of energy and power wasted, hazard level, etc.). Some of this information may be displayed within the GIS screen 76, as described above.

At block 86, the operator system 57 and the physical server 52 may perform some troubleshooting by determining the human and physical resources that may resolve or be used to resolve the outage using analyzed metadata (e.g., issue location, resource location, crew expertise, crew assignments, equipment availability, etc.). In certain embodiments, a portion or all of the human and physical resources may be displayed within the GIS screen 76, as described above. Next, at block 88, the operator system 57 displays the best individual to contact to resolve the outage and the best available communication method as described above.

Finally, at block 90, the operator can use the operator system 57 to initiate communication (e.g., phone call, chat, email, SMS/text, etc.) with a crew lead or member. For example, if the operator chooses to initiate a phone call, the operator system 57 may then use the PBX system 48 to initiate a voice-over IP conference call. The physical server 52 then logs and analyzes the communication action and content and updates to reflect the change in state, as described above.

Technical effects of the present embodiments include systems and methods for managing infrastructure systems. Certain embodiments enable users to perform a variety of tasks using one system and set of devices. For example, the present management response system may combine the functionality of a distribution management system (DMS) with that of an outage management system (OMS). The management response system may also be an add-on to a communication system, such as a telecommunications system, and may allow a user to initiate communications with another individual or entity, further increasing the number of tasks that can be performed using the management response system. Further, the management response system may also log and analyze all communication actions by a user and the content associated with the communication actions. The analyzed data may be used for a variety of applications, such as smart troubleshooting for deriving future issues, providing data to training modules, creating automated audits, and the like. The technical effects and technical problems in the specification are exemplary and not limiting. It should be noted that the embodiments described in the specification may have other technical effects and can solve other technical problems.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a physical server configured to operatively couple to a communications system included in an infrastructure system, to at least one client, and to a database repository, wherein the physical server is configured to:
      provide a conferencing service to the at least one client via the communications system;
      receive a first status update of the infrastructure system from the communications system;
      receive a second status update of the infrastructure system from the at least one client; and
      transmit the first status update and the second status update to the database repository;
      wherein the database repository is configured to:
      update a global state of the infrastructure system based on the first status update and the second status update;
      transmit the global state update to a second database repository; and
      transmit the global state update to the physical server; and
      wherein the at least one client is configured to:
         display a state of the infrastructure system;
      display a plurality of users and a user status for each of the plurality of users, wherein the user status for each of the plurality of users comprises a log-in status for a respective user, a list of communication actions associated with the respective user, or a combination thereof;
      receive the global state update from the physical server;
      change the display of the state of the infrastructure system and the display of the plurality of users and the user status for each of the plurality of users based on the global state update; and
      communicatively couple to another client.
2. The system of clause 1, wherein the first status update and the second status update comprise a first communication action, a content of a second communication action, or a combination thereof.
3. The system of clause 1 or 2, wherein the first communication action and the second communication action comprise a telephone conference call, a video conference all, a short messaging service message, an email, a voicemail, a chat message, a bulletin board posting, a forum posting, or a combination thereof.
4. The system of any preceding clause, wherein the global state update comprises:
   a list of a plurality of physical servers within the system, wherein the plurality of physical servers includes the physical server;
   a first list of a plurality of users and a log-in status of each of the plurality of users;
   a second list of a plurality of users and a communication action for each of the plurality of users;
   a log of communication actions; or
   a combination thereof.
5. The system of any preceding clause, comprising a distribution management system, an outage management system, or a combination thereof, having the physical server.
6. The system of any preceding clause, wherein the at least one client comprises a mobile device, a cell phone, a tablet, a notebook, a laptop, a personal computer, or a combination thereof.
7. The system of any preceding clause, wherein the infrastructure system comprises a smart grid system, a cloud computing system, an airport infrastructure system, a transit infrastructure system, or a telecommunications infrastructure system.

## Claims

1. A system, comprising:
a physical server (52) configured to be operatively coupled to a communications system (48) and configured to:
connect with a plurality of clients (56);
provide an application programming interface (API) (59) to enable the plurality of clients (56) to communicatively couple to each other via the communications system (48);
provide the API (59) to enable an operator system (57) to place a conference call to the plurality of clients (56);
provide the API (59) to enable the plurality of clients (56) to send and to receive status updates (58) for an infrastructure system (10) via the communications system (48);
monitor a status of calls between connected clients (56) of the plurality of clients (46); and
broadcast a global state update (62) to the connected clients (56).

2. The system of claim 1, wherein each of the plurality of clients (56) comprises a processor configured to:
display a current state of the infrastructure system (10), wherein displaying the current state comprises displaying at least one unresolved issue;
receive a user selection of the at least one unresolved issue;
receive from the physical server (52) a first list of human resources based on a set of data, wherein the human resources may resolve the at least one unresolved issue;
receive from the physical server (52) a second list of physical resources based on the set of data, wherein the physical resources may be used to resolve the at least one unresolved issue;
display a communication action for each of the human resources in the first list of human resources;
receive a user request to communicate with at least one of the human resources using the displayed communication action; and
utilize the API (59) to communicatively couple to a client (56) belonging to the at least one of the human resources.

3. The system of claim 2, wherein the set of data comprises the at least one unresolved issue, a location of the at least one unresolved issue, a time stamp of the at least one unresolved issue, an impact of the at least one unresolved issue, an expertise requirement for at least one of the human resources, an assignment for the human resources, the physical resources, or a combination thereof.

4. The system of claim 2 or 3, wherein displaying the current state further comprises displaying a geographical view (73) of the infrastructure system (10).

5. The system of any of claims 2 to 4, wherein the communication action comprises a telephone conference call, a video conference call, a short messaging service message, an email, a chat message, a bulletin board posting, a forum posting, or a combination thereof.

6. The system of any preceding claim, wherein the physical server (52) is further configured to derive a contact list (71) for the conference call based on the global state update (62).

7. The system of any preceding claim, wherein the global state update (62) comprises:
a list of a plurality of physical servers (52) within the system, wherein the plurality of physical servers (52) includes the physical server;
a first list of a plurality of users and a log-in status of each of the plurality of users;
a second list of a plurality of users and a communication action for each of the plurality of users;
a log of communication actions; or a combination thereof.

8. The system of any preceding claim, wherein the operator system (57) is configured to display a current state of the infrastructure system (10) comprising:
a map view (73) comprising a visual representation of the infrastructure system (10); and
a contact list view (70) comprising a contact list (71) related to the smart grid system.

9. The system of any preceding claim, wherein the operator system (57), at least one of the plurality of clients (56), or a combination thereof is configured to display a map view (73) of a geographic area having an issue affecting the infrastructure system (10), wherein the map view (73) comprises a geometric shape (75) representative of a number of customers affected by the issue.

10. The system of claim 9, wherein the map view comprises a semantic zoom configured to present different information related to the issue affecting the infrastructure system (10) based on a zoom level.

11. The system of any preceding claim, comprising a distribution management system (40), an outage management system (38), or a combination thereof, having the physical server (52).

12. The system of any preceding claim, wherein the at least one client (46) comprises a mobile device, a cell phone, a tablet, a notebook, a laptop, a personal computer, or a combination thereof.

13. The system of any preceding claim, wherein the infrastructure system comprises a smart grid system (10), a cloud computing system, an airport infrastructure system, a transit infrastructure system, or a telecommunications infrastructure system.

14. A method, comprising:
connecting with a plurality clients (56);
providing an application programming interface (API) (59) to enable the plurality of clients (56) to communicatively couple to each other via a communications system (48);
providing the API (59) to enable the plurality of clients (56) to place a conference call to the plurality of clients (56);
providing the API (59) to enable the plurality of clients (56) to send and to receive status updates (58) for a infrastructure system (10) via the communications system (48);
monitoring a status of calls between connected clients (56) of the plurality of clients; and
broadcasting a global state update (62) to the connected clients (56).

15. The method of claim 14, further comprising:
logging each communication action performed by the plurality of clients (46) and content of each communication action; and
associating a communication action, content of the communication action, or a combination thereof with at least one of a plurality of tags.
